# EUROPEAN PATENT APPLICATION

(11) **EP 4 734 587 A1**
(43) Date of publication of application: **29.04.2026**
(21) Application number: 23941977.3
(22) Date of filing: 21.06.2023
(51) Int. Cl.: H04W 24/02

(54) **INFORMATION PROCESSING METHOD, TERMINAL, NETWORK DEVICE, COMMUNICATION SYSTEM AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2023/101975
(87) International publication number: WO 2024/259706

(57) **Abstract**

The embodiments of the disclosure relate to an information processing method, a terminal, a network device, a communication system and a storage medium. The information processing method comprises: on the basis of GNSS measurement being successful, a terminal determining a predetermined operation, wherein the predetermined operation comprises at least one of the following: sending first indication information, wherein the first indication information is used for indicating that GNSS measurement is successful; and executing a first operation or not executing the first operation, wherein the first operation comprises at least one of the following: uplink data transmission or downlink data transmission, measurement operation, and control information detection. Thus, a behavior of a terminal after GNSS measurement is successful can be determined, thereby helping to improve the stability of a communication system.

## Description

### TECHNICAL FIELD

The disclosure relates to the field of communication technologies, and particularly to a method for processing information, a terminal, a network device, a communication system, and a storage medium.

### BACKGROUND

In wireless communication technologies, satellite communication is considered as an important aspect of development of future wireless communication technologies, while a behavior of a terminal is not clear after the terminal obtains a measurement result in a satellite communication scenario.

### SUMMARY

Embodiments of the disclosure need to solve a problem that a behavior of a terminal is not clear after the terminal obtains a measurement result in a satellite communication scenario.

Embodiments of the disclosure provide a method for processing information, a terminal, a network device, a communication system, and a storage medium.

According to a first aspect of embodiments of the disclosure, a method for processing information is provided, including: determining, by a terminal, a predetermined operation based on a global navigation satellite system (GNSS) measurement success, in which the predetermined operation includes at least one of: sending first indication information, in which the first indication information indicates the GNSS measurement success; or performing a first operation or not performing a first operation, in which the first operation includes at least one of: uplink (UL) data transmission or downlink (DL) data transmission, measurement operation, or control information detection.

According to a second aspect of embodiments of the disclosure, a method for processing information is provided, including: receiving, by a network device, first indication information, in which the first indication information indicates a GNSS measurement success, and the first indication information is sent by a terminal after the GNSS measurement success is determined.

According to a third aspect of embodiments of the disclosure, a method for processing information is provided, including: determining, by a terminal, a predetermined operation based on a GNSS measurement success, in which the predetermined operation includes sending first indication information, and the first indication information indicates the GNSS measurement success; and receiving, by a network device, the first indication information sent by the terminal.

According to a fourth aspect of embodiments of the disclosure, a terminal is provided, including: a first processing module, configured to determine a predetermined operation based on a GNSS measurement success, in which the predetermined operation includes at least one of: sending first indication information, in which the first indication information indicates the GNSS measurement success; or performing a first operation or not performing a first operation, in which the first operation includes at least one of: UL data transmission or DL data transmission, measurement operation, or control information detection.

According to a fifth aspect of embodiments of the disclosure, a network device is provided, including: a second transceiver module, configured to receive first indication information, in which the first indication information indicates a GNSS measurement success, and the first indication information is sent by a terminal after the GNSS measurement success is determined.

According to a sixth aspect of embodiments of the disclosure, a terminal is provided, including: one or more processors, in which the terminal is configured to perform alternative implementations of the first aspect.

According to a seventh aspect of embodiments of the disclosure, a network device is provided, including: one or more processors, in which the network device is configured to perform alternative implementations of the second aspect.

According to an eighth aspect of embodiments of the disclosure, a communication system is provided, including: a terminal and a network device, in which the terminal is configured to perform the method described in alternative implementations of the first aspect, and the network device is configured to perform the method for processing information described in alternative implementations of the second aspect.

According to a ninth aspect of embodiments of the disclosure, a storage medium for storing instructions is provided. When the instructions are run on a communication device, the communication device is caused to perform the method described in the first aspect, the second aspect and the third aspect, or the method described in alternative implementations of the first aspect, the second aspect and the third aspect.

Embodiments of the disclosure may clarify the behavior of the terminal after the terminal obtains the measurement result in the satellite communication scenario.

### BRIEF DESCRIPTION OF THE DRAWINGS

In order to more clearly illustrate the technical solution in embodiments of the disclosure, accompanying drawings required in description of the embodiments of the disclosure will be introduced below. The following accompanying drawings are only some embodiments of the disclosure, and do not constitute a limitation on a protection scope of the disclosure.
FIG. 1A is a block diagram illustrating a system for processing information according to an embodiment of the disclosure.
FIG. 1B is a schematic diagram illustrating uplink (UL) and downlink (DL) timing alignment on a user equipment (UE) side according to an embodiment of the disclosure.
FIG. 1C is a schematic diagram illustrating UL and DL timing misalignment on a UE side according to an embodiment of the disclosure.
FIG. 1D is a schematic diagram illustrating a network device triggering global navigation satellite system (GNSS) measurement according to an embodiment of the disclosure.
FIG. 1E is a schematic diagram illustrating a terminal autonomously performing GNSS measurement according to an embodiment of the disclosure.
FIG. 2 is a schematic diagram illustrating interaction of a method for processing information according to an embodiment of the disclosure.
FIG. 3A is a flow chart illustrating a method for processing information according to an embodiment of the disclosure.
FIG. 3B is a flow chart illustrating a method for processing information according to an embodiment of the disclosure.
FIG. 3C is a flow chart illustrating a method for processing information according to an embodiment of the disclosure.
FIG. 4A is a flow chart illustrating a method for processing information according to an embodiment of the disclosure.
FIG. 4B is a flow chart illustrating a method for processing information according to an embodiment of the disclosure.
FIG. 5 is a flow chart illustrating a method for processing information according to an embodiment of the disclosure.
FIG. 6A is a schematic diagram illustrating a terminal behavior within a configured GNSS measurement gap according to an embodiment of the disclosure.
FIG. 6B is a schematic diagram illustrating a terminal behavior within a configured GNSS measurement gap according to an embodiment of the disclosure.
FIG. 7A is a block diagram illustrating a terminal according to an embodiment of the disclosure.
FIG. 7B is a block diagram illustrating a network device according to an embodiment of the disclosure.
FIG. 8A is a block diagram illustrating a communication device according to an embodiment of the disclosure.
FIG. 8B is a block diagram illustrating a chip according to an embodiment of the disclosure.

### DETAILED DESCRIPTION

Embodiments of the disclosure provide a method for processing information, a terminal, a network device, a communication system, and a storage medium.

In a first aspect, embodiments of the disclosure provide a method for processing information, including: determining, by a terminal, a predetermined operation based on a global navigation satellite system (GNSS) measurement success, in which the predetermined operation includes at least one of: sending first indication information, in which the first indication information indicates the GNSS measurement success; or performing a first operation or not performing a first operation, in which the first operation includes at least one of: uplink (UL) data transmission or downlink (DL) data transmission, measurement operation, or control information detection.

In the above embodiments, a behavior of the terminal after the GNSS measurement success by the terminal may be clarified. Moreover, in the case that the predetermined operation determined is sending the first indication information, it may also enable the terminal and the network device to have a consistent understanding on the behavior of the terminal, thus also improving stability of the communication system (including the terminal and the network device).

In combination with some embodiments of the first aspect, in some embodiments, determining the predetermined operation based on the GNSS measurement success includes: determining the predetermined operation in the case that a second time is earlier than a first time, in which the first time is an end time of a GNSS measurement period, and the second time is a time of the GNSS measurement success.

In the above embodiments, it may be clarified that the end time of the GNSS measurement period is relatively long and a behavior of the terminal after the GNSS measurement success before the end time.

In combination with some embodiments of the first aspect, in some embodiments, the method also includes: determining a first period based on a difference between the first time and the second time. Determining the predetermined operation includes: determining the predetermined operation within the first period after the second time, and/or after the first time.

In the above embodiments, it may be determined that the terminal and the network device have a consistent understanding on the behavior of the terminal within the measurement period, thus improving stability of the communication system.

In combination with some embodiments of the first aspect, in some embodiments, the GNSS measurement period includes one of: a pre-configured GNSS measurement gap; or a timing period of a pre-configured GNSS measurement timer.

In the above embodiments, it may be determined that the measurement period is the GNSS measurement gap or the timing period of the pre-configured GNSS measurement timer, thus adapting to more application scenarios for determining the measurement period.

In combination with some embodiments of the first aspect, in some embodiments, determining the predetermined operation within the first period after the second time, and/or after the first time includes at least one of: not performing the first operation within the first period after the second time; or sending the first indication information after the first time.

In the above embodiments, the first operation may not be performed within the measurement period, such that the network device understands the behavior of the terminal; or the first indication information may be sent at the end time of the measurement period such that the network device understands the behavior of the terminal. Thus, multiple ways may be employed to ensure that the network device and the terminal have a consistent understanding on the behavior of the terminal.

In combination with some embodiments of the first aspect, in some embodiments, the method also includes one of: sending second indication information after the first time in the case that GNSS location information is not obtained before the first time, in which the second indication information indicates a GNSS measurement failure; or determining not to send the first indication information and/or second indication information after the first time in the case that GNSS location information is not obtained before the first time.

In the above embodiments, in the case that the GNSS location information is not received before the end time of the measurement period, GNSS measurement failure is sent or any indication information is not sent after the end time, such that the network device and the terminal have a consistent understanding on the behavior of the terminal.

In combination with some embodiments of the first aspect, in some embodiments, the measurement operation includes a DL synchronization measurement operation, and determining the predetermined operation within the first period after the second time, and/or after the first time includes at least one of: performing the DL synchronization measurement operation within the first period after the second time in the case that the first period is less than a predetermined period; or not performing at least one of the UL data transmission, the DL data transmission, or the control information detection within the first period after the second time in the case that the first period is less than a predetermined period.

In the above embodiments, in the case that there is a relatively small time interval between the time of the GNSS measurement success and the end time of the GNSS measurement period, the DL synchronization measurement operation is performed without needing configuration of the network device or operations such as the UL data transmission or the DL data transmission may not be performed, while it may be still ensured that the network device and the terminal have a consistent understanding on the behavior of the terminal.

In combination with some embodiments of the first aspect, in some embodiments, determining the predetermined operation within the first period after the second time, and/or after the first time also includes: sending the first indication information within the first period after the second time in the case that the first period is greater than or equal to a predetermined period.

In the above embodiments, when there is a relatively large time interval between the time of the GNSS measurement success and the end time of the GNSS measurement period, the network device may be informed about a situation of the terminal within the first period, such that the network device and the terminal have a consistent understanding on the behavior of the terminal at a relatively early time, thus further improving stability of the communication system.

In combination with some embodiments of the first aspect, in some embodiments, sending the first indication information within the first period after the second time includes: sending the first indication information at a third time after the second time and within the first period after the second time, in which the third time is determined based on the second time and a second period.

In the above embodiments, the terminal may inform the network device about a situation of the terminal within the first period, i.e., before the end time of the measurement period.

In combination with some embodiments of the first aspect, in some embodiments, determining the predetermined operation within the first period after the second time, and/or after the first time further includes: performing a control information detection operation at a fourth time after the third time and within the first period after the second time, in which the fourth time is determined based on the third time and a third period.

In the above embodiments, the terminal may perform the control information detection operation within the first period without configuration of the network device, and may also ensure that the network device and the terminal have a consistent understanding on the behavior of the terminal.

In combination with some embodiments of the first aspect, in some embodiments, the method also includes: receiving third indication information after the fourth time; and determining to perform the first operation based on the third indication information.

In the above embodiment, the terminal may determine a behavior of a user equipment (UE) by an indication of the network device, which may also ensure that the network device and the terminal have a consistent understanding on the behavior of the terminal.

In combination with some embodiments of the first aspect, in some embodiments, the third period is greater than or equal to a fourth period, and the fourth period is a round-trip time (RTT) between the terminal and a network device.

In the above embodiments, the third period is greater than the RTT from the terminal to the network device, such that the network device has sufficient time to send the third indication information, thus helping reduce occurrence of the terminal missing detection of the third indication information, and improving effectiveness of the transmission.

In combination with some embodiments of the first aspect, in some embodiments, the first period is specified by a protocol or configured by the network device; and/or the second period is specified by a protocol or configured by the network device; and/or the third period is specified by a protocol or configured by the network device.

In the above embodiments, the first period, the second period, and/or the third period may be determined in multiple ways, thus adapting to more application scenarios.

In combination with some embodiments of the first aspect, in some embodiments, the first time is specified by a protocol or configured by a network device; and/or the second time is determined based on a time when GNSS location information is obtained.

In the above embodiments, the first time may be determined in multiple ways, which is suitable for more application scenarios; or the second time may be accurately determined.

In a second aspect, embodiments of the disclosure provide a method for processing information, including: receiving, by a network device, first indication information, in which the first indication information indicates a GNSS measurement success, and the first indication information is sent by a terminal after the terminal determines the GNSS measurement success.

In combination with some embodiments of the second aspect, in some embodiments, the first indication information is sent after the terminal determines that a second time is earlier than a first time, the first time is an end time of a GNSS measurement period, and the second time is a time of the GNSS measurement success.

In combination with some embodiments of the second aspect, in some embodiments, the GNSS measurement period includes one of: a pre-configured GNSS measurement gap; or a timing period of a pre-configured GNSS measurement timer.

In combination with some embodiments of the second aspect, in some embodiments, receiving the first indication information includes one of: receiving the first indication information sent by the terminal after the first time; receiving the first indication information sent by the terminal within a first period after the second time, in which the first period is determined by the terminal based on a difference between the first time and the second time; or receiving the first indication information sent by the terminal after the second time.

In combination with some embodiments of the second aspect, in some embodiments, the method also includes: sending third indication information in the case that the first indication information sent by the terminal within the first period after the second time is received, in which the third indication information indicates to perform a first operation, and the first operation includes at least one of: UL data transmission, DL data transmission, measurement operation, or control information detection.

In a third aspect, embodiments of the disclosure provide a method for processing information, including: determining, by a terminal, a predetermined operation based on a GNSS measurement success, in which the predetermined operation includes sending first indication information, and the first indication information indicates the GNSS measurement success; and receiving, by a network device, the first indication information sent by the terminal.

In combination with some embodiments of the third aspect, in some embodiments, the method also includes: determining, by the terminal, a first period based on a difference between a first time and a second time, in which the first time is an end time of a GNSS measurement period, and the second time is a time of the GNSS measurement success; and determining, by the terminal, the predetermined operation based on the GNSS measurement success includes: sending, by the terminal, the first indication information after the first time.

According to a fourth aspect of embodiments of the disclosure, a terminal is provided, including: a first processing module, configured to determine a predetermined operation based on a GNSS measurement success, in which the predetermined operation includes at least one of: sending first indication information, in which the first indication information indicates the GNSS measurement success; or performing a first operation or not performing a first operation, in which the first operation includes at least one of: UL data transmission or DL data transmission, measurement operation, or control information detection.

According to a fifth aspect of embodiments of the disclosure, a network device is provided, including: a second transceiver module, configured to receive first indication information, in which the first indication information indicates a GNSS measurement success, and the first indication information is sent by a terminal after the GNSS measurement success is determined.

According to a sixth aspect of embodiments of the disclosure, a terminal is provided, including: one or more processors, in which the terminal is configured to perform alternative implementations of the first aspect.

According to a seventh aspect of embodiments of the disclosure, a network device is provided, including: one or more processors, in which the network device is configured to perform alternative implementations of the second aspect.

According to an eighth aspect of embodiments of the disclosure, a communication system is provided, including: a terminal and a network device, in which the terminal is configured to perform the method described in alternative implementations of the first aspect, and the network device is configured to perform the method described in alternative implementations of the second aspect.

According to a ninth aspect of embodiments of the disclosure, a storage medium for storing instructions is provided. When the instructions are run on a communication device, the communication device is caused to perform the method described in the first aspect, the second aspect and the third aspect, or the method described in alternative implementations of the first aspect, the second aspect and the third aspect.

According to a tenth aspect, embodiments of the disclosure provide a program product. When the program product is executed by a communication device, the communication device is caused to perform the method described in the first aspect, the second aspect and the third aspect, or the method described in alternative implementations of the first aspect, the second aspect and the third aspect.

According to an eleventh aspect, embodiments of the disclosure provide a computer program. When the computer program is run on a computer, the computer is caused to perform the method for processing information in the first aspect, the second aspect and the third aspect, or the method for processing information described in alternative implementations of the first aspect, the second aspect and the third aspect.

According to a twelfth aspect, embodiments of the disclosure provide a chip or a chip system. The chip or the chip system includes a processing circuit, configured to perform the method described in alternative implementations of the first aspect, the second aspect, and the third aspect.

It may be understood that the terminal, the network device, the communication system, the storage medium, the program product, the computer program, the chip or the chip system above are all used to perform the method provided by embodiments of the disclosure. Therefore, for beneficial effects that may be achieved reference may be made to beneficial effects in a corresponding method, and details are not repeated here.

Embodiments of the disclosure provide a method for processing information, a terminal, a network device, a communication system, and a storage medium. In some embodiments, the terms "method for processing information" and "communication method" may be replaced with each other, the terms "apparatus for processing information" and "communication device" may be replaced with each other, and terms "system for processing information" and "communication system" may be replaced with each other.

Embodiments of the disclosure are not exhaustive and only serve as illustrations of some embodiments, but not as detailed limitations to the protection scope of the disclosure. Without contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, Alternative implementations in an embodiment may be arbitrarily combined. Furthermore, different embodiments may be arbitrarily combined. For example, some or all steps of different embodiments may be arbitrarily combined, and an embodiment may be arbitrarily combined with alternative implementations of other embodiments.

In various embodiments of the disclosure, unless otherwise specified and in case of logical inconsistency, terms and/or descriptions are consistent in all embodiments and may be used each other. Technical features in different embodiments may be combined to form a new embodiment based on their inherent logical relationships.

The terms used in embodiments of the disclosure are for a purpose of describing specific embodiments only and are not intended to limit the disclosure.

In embodiments of the disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In embodiments of the disclosure, "a plurality of/multiple" means two or more.

In some embodiments, terms such as "at least one of", "one or more", "a plurality of", "multiple", etc. may be used interchangeably.

In some embodiments, expressions such as "at least one of A or B", "A and/or B", "at least one of A or B", "in a case A, in another case B", and "in response to a case A, in response to another case B" in the disclosure, depending on situations, may include at least one of the following solutions: performing A (performing A independently of B) in some embodiments; performing B (performing B independently of A) in some embodiments; selecting one of A or B for execution (selectively performing A or B) in some embodiments; and performing A and B (performing both A and B) in some embodiments. The similar principle applies when there are more parts such as A, B, C, etc.

In some embodiments, expressions such as "A or B", depending on situations, may include the following technical solutions: performing A (performing A independently of B) in some embodiments; performing B (performing B independently of A) in some embodiments; and selecting one of A or B for execution (selectively performing A or B) in some embodiments. The similar principle applies when there are more parts such as A, B, C, etc.

The prefix words such as "first" and "second" in embodiments of the disclosure are used merely to distinguish different described objects, and do not limit a position, a sequence, a priority, a quantity, or content of the described objects. For a statement regarding the described object, reference may be made to claims or descriptions in the context of embodiments, which should not constitute other restrictions due to the use of the prefix words. For example, if the described object is "field", ordinal numbers before the "field" in "first field" and "second field" do not limit a position or a sequence between fields. "First" and "second" do not limit whether modified "fields" are in the same message, nor do an order of the "first field" and the "second field." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatuses". In addition, objects modified by different prefix words may be the same or different. For example, if the described object is an "apparatus", "first apparatus" and "second apparatus" may be the same apparatus or different apparatuses, and types of the "first apparatus" and "second apparatus" may be the same or different. Similarly, if the described object is "information", "first information" and "second information" may be same information or different information, and content of "first information" and "second information" may be the same or different.

In some embodiments, "including A", "containing A", "configured to indicate A", or "carrying A" may be interpreted as directly carrying A or indirectly indicating A.

In some embodiments, terms such as "in response to...", "in response to determining...", "in a case that...", "when...", "if..." etc. may be used interchangeably.

In some embodiments, the terms such as "greater than", "greater than or equal to", "not less than", "more than", "more than or equal to", "no less than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably.

In some embodiments, "apparatus" may be interpreted as either a physical apparatus or a virtual apparatus. Names of the "apparatus" are not limited to those recorded in the embodiments. The terms such as "apparatus", "equipment", "device", "circuit", "network element", "node", "function", "unit", "section", "system", "network", "chip", "chip system", "entity", "subject", etc. may be used interchangeably.

In some embodiments, "network" may be interpreted as an apparatus (such as, an access network device, a core network device, etc.) included in a network.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)", etc. may be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. may be used interchangeably.

In some embodiments, an access network device, a core network device, or a network device may be replaced by a terminal. For example, a structure where communication between the access network device, the core network device, or the network device and the terminal is replaced with communication among multiple terminals (e.g., device-to-device (D2D), or vehicle-to-everything (V2X), etc.) may also be applied to respective embodiments of the disclosure. In this case, the terminal may be set to have all or some of functions of the access network device. In addition, terms such as "uplink (UL)" and "downlink (DL)" may be replaced with language (such as, "sidelink") corresponding to communication between the terminals. For example, a UL channel or a DL channel may be replaced with a sidelink channel; and a UL or a DL may be replaced with a sidelink.

In some embodiments, the terminal may be replaced with the access network device, the core network device, or the network device. In this case, the access network device, the core network device, or the network device may be set to have all or some of functions of the terminal.

In some embodiments, obtaining data, information, etc. shall comply with laws and regulations of a located country.

In some embodiments, data, information, etc. may be obtained after agreed by a user.

In addition, each element, each row, or each column in tables of embodiments of the disclosure may be implemented as an independent embodiment. Any combination of elements, rows, or columns may also be implemented as an independent embodiment.

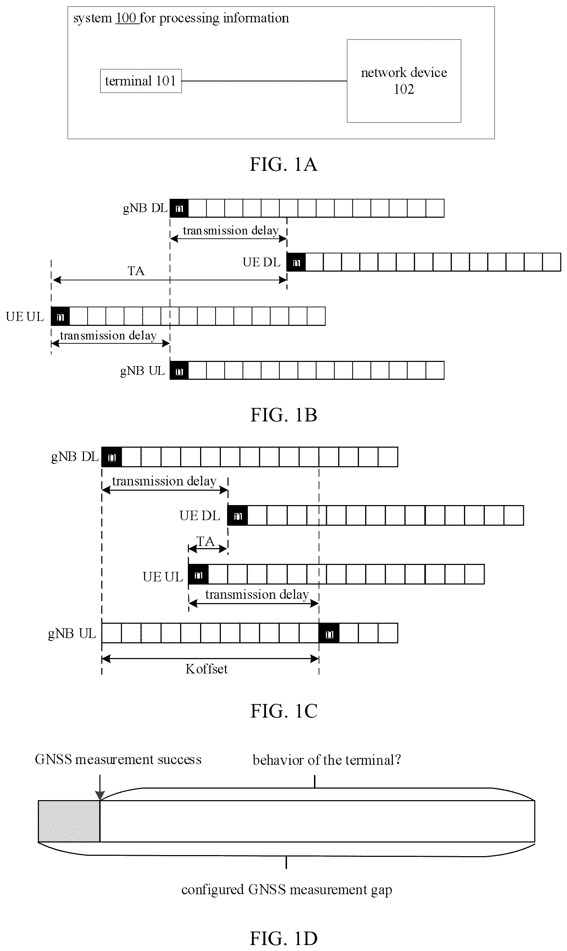

FIG. 1A is a block diagram illustrating a system 100 for processing information according to embodiments of the disclosure. As illustrated in FIG. 1A, the communication system 100 may include a terminal 101 and a network device 102.

In some embodiments, the network device 102 may include at least one of an access network device or a core network device.

In some embodiments, the terminal 101 includes at least one of a mobile phone, a wearable device, an Internet of Things device, or a car with a communication function, a smart car, and a Pad, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited to these.

In some embodiments, the access network device is, such as, a node or device that connects the terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (WiFi) system, which is not limited to these.

In some embodiments, the technical solution of the disclosure may be applied to an architecture of the Open RAN. In this case, an interface between access network devices or within the access network device in embodiments of the disclosure may become an internal interface of the Open RAN. Processes and information interaction may be implemented via software or programs.

In some embodiments, the access network device may be combined by a central unit (CU) and distributed units (DUs). The CU may also be referred to as a control unit. The use of a CU-DU structure allows to divide a protocol layer of the access network device, such that some of the protocol layer functions are placed in the CU for centralized control, and some or all of the remaining protocol layer functions are distributed in the DUs, and the DUs are centrally controlled by the CU, which is not limited to these.

In some embodiments, the core network device may be a device including a first network element and a second network element, or may be multiple devices or device groups, each of which includes all or some of the first network element and the second network element. The network element may be virtual or physical. The core network includes, such as, at least one of an evolved packet core (EPC), a 5G core network (5GCN), or a next generation core (NGC).

It may be understood that the system for processing information in embodiments of the disclosure is to clearly illustrate the technical solution of embodiments of the disclosure, which does not constitute a limitation on the technical solution in embodiments of the disclosure. Those skilled in the art may know, with evolution of the system architecture and emergence of new service scenarios, the technical solution in embodiments of the disclosure is also applicable to similar technical problems.

The following embodiments of the disclosure may be applied to the communication system 100 illustrated in FIG. 1A, or to some entities, which are not limited to this. Entities in FIG. 1A are illustrative. The system for processing information may include all or some of the entities in FIG. 1A, or may include other entities not illustrated in FIG. 1A. The number of entities and the form of the entities may be arbitrary. A connection relationship between the entities is illustrative. The entities may be unconnected or may be connected. The connection may be in any manner, which may be a direct connection or indirect connection, or may be a wired or wireless connection.

Embodiments of the disclosure may be applied to long term evolution (LTE), LTE-Advanced (LTE-A), LTE-Beyond (LTE-B), SUPER 3G, IMT-Advanced, a 4th generation mobile communication system (4G), a 5th generation mobile communication system (5G), 5G new radio (NR), future radio access (FRA), new-radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a public land mobile network (PLMN), a device-to-device (D2D) system, a machine to machine (M2M) system, Internet of Things (IoT) system, Vehicle-to-Everything (V2X), a system using other communication method, a next-generation system based on them, etc. In addition, a combination of multiple systems (such as, a combination of LTE or LTE-A with 5G) may be applied.

In some embodiments, continuous emergence of a new Internet application such as augmented reality (AR), virtual reality (VR), and the like has placed a higher demands on wireless communication technologies, driving continuous evolution of the wireless communication technologies to meet an application requirement. Cellular mobile communication technology is currently in an evolution stage of a new generation of technology. An important feature of the new generation of technology is to support flexible configuration of various service types. Since different service types have different requirements for wireless communication technology, for example, a main requirement of an enhanced mobile broadband (eMBB) service type emphasizes an aspect such as a large bandwidth and a high velocity; a main requirement of an ultra-reliable and low latency communications (URLLC) service type emphasizes an aspect such as a high reliability and a low latency; and a main requirement of a massive machine type communication (mMTC) service type emphasizes an aspect such as big data. Therefore, the wireless communication system in the new generation requires a flexible and configurable design to support transmission of multiple service types.

In research on the wireless communication technologies, satellite communication is considered an important aspect of development of future wireless communication technologies. The satellite communication refers to a communication where a wireless communication device on the ground employs a satellite as a relay. A satellite communication system is combined by a satellite part and a ground part. Characteristics of the satellite communication are: a large communication range, for example, communication may be performed between any two points as long as within a coverage of a radio wave emitted by the satellite; and less susceptible to terrestrial disasters (high reliability). As a supplement to a current terrestrial cellular communication system, the satellite communication has the following benefits: extending coverage, for example, for an areas currently uncovered or with a high coverage cost by the cellular communication system, such as oceans, deserts, and remote mountainous areas, the satellite communication may help to solve communication problems; emergency communication: for example, in an extreme situations such as disasters like earthquakes, which causes infrastructures of the cellular communication are unavailable, the satellite communication may quickly establish a communication connection; and providing an industry application, for example, for a delay-sensitive service with long-distance transmission, a delay of service transmission may be reduced in a satellite communication way.

It is foreseeable that in a future wireless communication system, the satellite communication system and the terrestrial cellular communication system may be deeply integrated, truly realizing intelligent connection of things to things. However, due to high-velocity movement of satellites, it is impossible to effectively achieve reliability of data interaction in a satellite communication scenario.

In some embodiments, in the satellite communication scenario, due to a long signal transmission distance between a transmitter and a receiver, there is a significant delay in data transmission. For transmission with a UL-DL relationship, it is determined that the terminal needs to compensate for a propagation delay based on configuration of the base station.

For example, as illustrated in FIG. 1B, a gNB UL and a gNB DL of the base station (gNB) are time-aligned, that is, frames marked n in the gNB UL and the gNB DL in FIG. 1B are aligned. Referring to FIG. 1B, there is a transmission delay between the gNB UL and a UE DL. A UE UL time advance (TA) needs to consider a transmission delay from the UE to the satellite, such that ULs of different UEs may reach the gNB within a predetermined time range.

For example, as illustrated in FIG. 1C, the gNB UL and the gNB DL of the gNB are not time-aligned, that is, frames marked n in a gNB UL and a gNB DL in FIG. 1C are not aligned, and there is a gNB DL-UL frame timing shift in a time domain. There is a transmission delay between the gNB DL and the UE DL. Similarly, the UE UL TA needs to consider the transmission delay from the terminal to the satellite, such that ULs of different UEs may reach the gNB within a predetermined time range. In this embodiment, when the TA is considered, the gNB DL-UL frame timing shift between the gNB UL and the gNB DL of the gNB in the time domain may be considered.

Alternatively, an offset (Koffset) may be applied in multiple operations, for example, the offset may be applied in at least one operation such as a physical uplink shared channel (PUSCH) transmission scheduled by downlink control information (DCI), transmission of hybrid automatic repeat request (HARQ) feedback information, and transmission of a medium access control control element (MAC CE).

In some embodiments, the terminal needs to obtain location information to determine timing compensation of UL transmission. The terminal may determine location information of the terminal via a GNSS measurement module.

In some embodiments, after the terminal obtains the GNSS measurement result, a reliable time of the GNSS may be reported to the base station within a GNSS validity duration. When the GNSS validity duration of the terminal expires, the terminal may enter an IDLE state. The behavior that the terminal enters the IDLE state and reobtains the GNSS may bring an unnecessary delay. The base station may trigger the terminal to perform GNSS measurement in a connected state, to avoid the terminal entering the IDLE state.

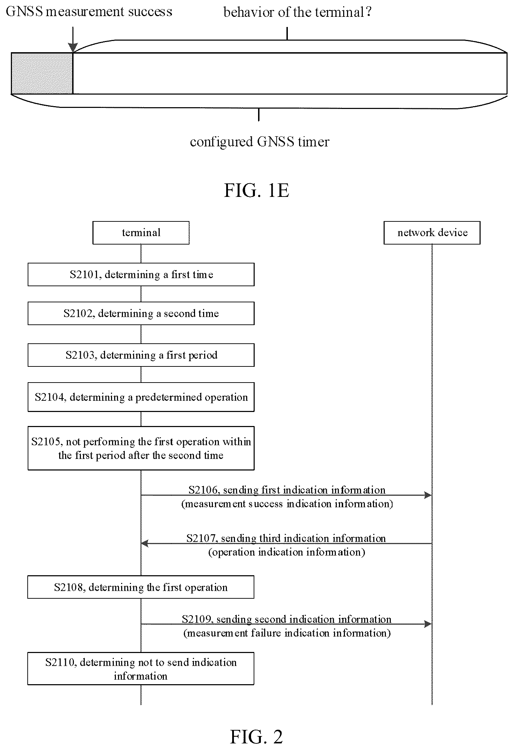

Alternatively, the terminal may accept the MAC CE sent by the base station to determine a GNSS measurement gap. However, the GNSS measurement gap configured by the base station is relatively long, and a behavior of the terminal within the GNSS measurement gap needs to be clarified. For example, as illustrated in FIG. 1D, if the GNSS measurement gap of the terminal is relatively long, and the terminal completes the GNSS measurement early within the GNSS measurement gap, the behavior of the terminal needs to be clarified. For another example, as illustrated in FIG. 1E, if a timing period of the GNSS measurement timer of the terminal is configured to be relatively long, and the terminal completes the GNSS measurement early within the timing period of the GNSS measurement timer, the behavior of the terminal needs to be clarified.

FIG. 2 is a schematic diagram illustrating interaction of a method for processing information according to an embodiment of the disclosure. As illustrated in FIG. 2, embodiments of the disclosure relate to a method for processing information, applied to the system 100 for processing information. The above method includes the following.

At step S2101, a terminal determines a first time.

In some embodiments, the first time may be an absolute time unit or a logical time unit. The absolute time unit may be second (s), or millisecond (ms), etc.; and the logical time unit may be subframe, slot, or symbol, etc. For example, the first time may be the 10th s or the 10th ms, etc.; for another example, the first time may be the first subframe, the first slot in the 1st subframe, or the first symbol of the first slot in the first subframe.

In some embodiments, the first time is an end time of a GNSS measurement period.

In some embodiments, the terminal determines the first time according to a protocol-agreed way. For example, the first time is agreed by a communication protocol, or the terminal and the network device agree the first time specified by a protocol.

In some embodiments, the terminal determines the first time according to configuration of the network device. For example, the terminal receives configuration information sent by the network device, in which the configuration information indicates the first time.

In some embodiments, the GNSS measurement period includes one of: a GNSS measurement gap; or a timing period of a GNSS measurement timer. For example, the GNSS measurement gap may be a pre-configured GNSS measurement gap or a protocol-agreed GNSS measurement gap. For example, the GNSS measurement timer may be a pre-configured GNSS measurement timer or a protocol-agreed GNSS measurement timer.

Alternatively, the GNSS measurement gap may be any type of a measurement gap or a measurement period window, and/or the GNSS measurement timer may be any type of timer.

At step S2102, the terminal determines a second time.

In some embodiments, the second time may be an absolute time unit or a logical time unit.

In some embodiments, the second time is a time of the GNSS measurement success.

In some embodiments, the second time is determined based on a time when GNSS location information is obtained. The second time is determined based on the time when the GNSS location information is obtained by GNSS measurement. Alternatively, the second time is determined based on the time when valid GNSS location information or available GNSS location information is obtained by the GNSS measurement.

In some embodiments, the terminal determines a start time of the GNSS measurement. Alternatively, the start time of the GNSS measurement is a start time of the second time. Alternatively, the start time of the GNSS measurement is a start position of the GNSS measurement in a time domain.

In some embodiments, the start time of the GNSS measurement may be pre-configured by the terminal or autonomously selected by the terminal.

In some embodiments, the start time of the GNSS measurement may be determined based on configuration of the network device. For example, the network device may configure the start time of the GNSS measurement of the terminal to be a start time of the measurement period.

At step S2103, the terminal determines a first period.

In some embodiments, the terminal determines the first period based on a difference between the first time and the second time. For example, if the first time is X1 and the second time is X2, the first period is X=X1-X2.

In some embodiments, the terminal determines a time interval between the time of the GNSS measurement success and the end time of the GNSS measurement gap as the first period; or the terminal determines a time interval between the time of the GNSS measurement success and the end time of the GNSS measurement timer as the first period.

At step S2104, the terminal determines a predetermined operation.

In some embodiments, the terminal determines the predetermined operation based on a GNSS measurement success.

In some embodiments, the terminal determines the predetermined operation in the case that a second time is earlier than a first time.

In some embodiments, the terminal determines the predetermined operation within the first period after the second time.

In some embodiments, the terminal determines the predetermined operation after the first time.

In some embodiments, the predetermined operation includes at least one of: whether to send the first indication information, or whether to perform the first operation. Alternatively, the predetermined operation includes at least one of: sending the first indication information, not sending the first indication information, performing the first operation, or not performing the first operation.

Alternatively, the first operation includes at least one of: UL data transmission, DL data transmission, measurement operation, or control information detection. For example, the measurement operation includes any type of measurement operation, for example, the measurement operation includes GNSS measurement operation or DL synchronization measurement operation, etc. For example, the control information detection includes detection of any type of control information or control signaling or control channel. For example, the control information detection may be a physical downlink control channel (PDCCH).

Alternatively, the first operation may be any cellular-related operation.

In some embodiments, the terminal determines the predetermined operation based on a magnitude relationship between the first period and the predetermined period.

In some embodiments, the terminal performs the DL synchronization measurement operation within the first period after the second time in the case that the first period is less than a predetermined period.

In some embodiments, the terminal does not perform at least one of the UL data transmission, the DL data transmission, or the control information detection within the first period after the second time in the case that the first period is less than a predetermined period.

In some embodiments, the terminal performs control information detection operation at a fourth time after a third time and within the first period after the second time in the case that the third period is greater than or equal to a predetermined period. Alternatively, both the third time and the fourth time may be any time.

Alternatively, the third time is determined based on the second time and a second period.

Alternatively, the fourth time is determined based on the third time and a third period.

Alternatively, all the predetermined period, the second period, the third period, the third time, and the fourth time may be the absolute time units or the logical time units.

Alternatively, all the predetermined period, the second period, the third period, the third time, and the fourth time may be protocol-agreed or configured by the network device. For example, the agreement based on the protocol may be specified by a communication protocol or specified by a negotiation between the network device and the terminal. The communication protocol may be a wireless communication standard protocol.

Alternatively, the second time is earlier than the third time, and the third time is earlier than the fourth time. Alternatively, the fourth time is earlier than the first time, or the fourth time is later than the first time.

Alternatively, a sum of the second time and the first period is equal to the first time, a sum of the second time and the second period is equal to the third time, and a sum of the third time and the third period is equal to the fourth time.

Alternatively, the third period is greater than or equal to a fourth period, and the fourth period is an RTT from the terminal and the network device.

At step S2105, the terminal does not perform the first operation within the first period after the second time.

In some embodiments, in the case that the terminal determines that the second time is earlier than the first period, the terminal does not perform the first operation within the first period after the second time.

In some embodiments, the terminal determines the second time after determining the GNSS measurement success; and does not perform the first operation within the first period after the second time.

At step S2106, the terminal sends first indication information to the network device.

In some embodiments, the network device receives the first indication information sent by the terminal.

In some embodiments, the first indication information indicates the GNSS measurement success.

In some embodiments, the first indication information is used for the network device to send third indication information.

In some embodiments, a name of the first indication information is not limited, for example, the first indication information may be success indication information or measurement success indication information, etc.

In some embodiments, a name of the third indication information is not limited, for example, the third indication information may be operation indication information, etc.

In some embodiments, the first indication information is sent within the first period after the second time. Alternatively, the terminal sends the first indication information within the first period after the second time in the case that the first period is greater than or equal to a predetermined period. Alternatively, the first indication information is sent at a third time after the second time and within the first period after the second time.

In some embodiments, the first indication information is sent after the first time.

At step S2107, the network device sends third indication information to the terminal.

In some embodiments, the terminal receives the third indication information sent by the network device.

In some embodiments, the third indication information is sent by the network device after determining that the first indication information indicates the GNSS measurement success.

In some embodiments, the network device sends the third indication information after the fourth time.

In some embodiments, the terminal receives the third indication information after the fourth time.

Alternatively, in the case that the fourth time is earlier than or equal to the first time, the network device sends the third indication information within the first period after the second time; or, in the case that the fourth time is later than the first time, the network device sends the third indication information after the first time.

In some embodiments, the third indication information may be carried and sent by at least one of a radio resource control (RRC) signaling, a media access control (MAC) control element (CE), or DCI.

At step S2108, the terminal determines the first operation.

In some embodiments, the terminal performs the first operation based on the third indication information.

Alternatively, the terminal determines to perform the first operation within the second period after the second time based on the third indication information.

Alternatively, the terminal determines to perform the first operation after the first time based on the third indication information.

At step S2109, the terminal sends second indication information to the network device.

In some embodiments, the network device receives the second indication information sent by the terminal.

In some embodiments, the second indication information indicates a GNSS measurement failure.

In some embodiments, a name of the second indication information is not limited, for example, the second indication information may be failure indication information or measurement failure indication information, etc.

In some embodiments, in the case that the terminal does not obtain GNSS location information before the first time, the terminal sends the second indication information. Alternatively, in the case that the terminal does not obtain GNSS location information before the first time, the terminal sends the second indication information after the first time.

At step S2110, the terminal determines not to send indication information.

In some embodiments, the indication information includes at least one of the first indication information or the second indication information.

In some embodiments, in the case that the terminal does not obtain the GNSS location information before the first time, the terminal determines not to send the indication information. Alternatively, in the case that the terminal does not obtain the GNSS location information before the first time, the terminal determines not to send the indication information after the first time.

In some embodiments, "acquire", "obtain", "get", "receive", "transmit", "send and/or receive" may be used interchangeably, which may be interpreted as receiving from another entity, acquiring from a protocol, obtaining via processing by itself, autonomously implementing, and other meanings.

In some embodiments, terms such as "send", "emit", "report", "deliver", "transmit", 'bidirectional transmission, and "send and/or receive" may be used interchangeably.

In some embodiments, terms such as "certain", "predetermined", "preset", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited thereto.

In some embodiments, judging or determining may be performed using a value represented by 1 bit (0 or 1), or by a true value or a false value represented by true or false (boolean), or by numerical comparison (e.g., comparing with a predetermined value), which is not limited thereto.

In some embodiments, "does not expect to receive" may be interpreted as not receiving in a time domain resource and/or a frequency domain resource, and may also be interpreted as not performing subsequent processing on the data after receiving the data; and "does not expect to send" may be interpreted as not sending, and may also be interpreted as sending but not expecting the receiver to respond to sent content.

The method for processing information involved in the embodiments of the disclosure may include at least one of steps S2101 to S2110. For example, step S2104 may be implemented as an independent embodiment; step S2105 may be implemented as an independent embodiment; step S2106 may be implemented as an independent embodiment; step S2109 may be implemented as an independent embodiment; a combination of steps S2107 and S2108 may be implemented as an independent embodiment; a combination of steps S2101, S2102, S2103, and S2104 may be implemented as an independent embodiment; a combination of steps S2101, S2102, S2103, and S2105 may be implemented as an independent embodiment; a combination of steps S2101, S2102, S2103, and S2110 may be implemented as an independent embodiment; a combination of steps S2101, S2102, S2103, and S2105 may be implemented as an independent embodiment; a combination of steps S2101, S2102, S2103, S2105, S2106, and S2107 may be implemented as an independent embodiment; a combination of steps S2101, S2102, S2103, S2104, S2107, and S2108 may be implemented as an independent embodiment; and a combination of steps S2101 to S2109 may be implemented as an independent embodiment.

In some embodiments, steps S2104 and S2105 may be performed in a reverse order or simultaneously; and steps S2104 and S2106 may be performed in a reverse order or simultaneously.

In some embodiments, steps S2101 to S2103 and steps S2105 to S2110 may be alternative, and one or more of these steps may be omitted or substituted in different embodiments.

In some embodiments, steps S2101 to S2104 and steps S2106 to S2110 may be alternative, and one or more of these steps may be omitted or substituted in different embodiments.

In some embodiments, steps S2101 to S2107 and steps S2109 to S2110 may be alternative, and one or more of these steps may be omitted or substituted in different embodiments.

In some embodiments, steps S2101 to S2109 may be alternative, and one or more of these steps may be omitted or substituted in different embodiments.

In some embodiments, reference may be made to other alternative implementations described before or after the description corresponding to FIG. 2.

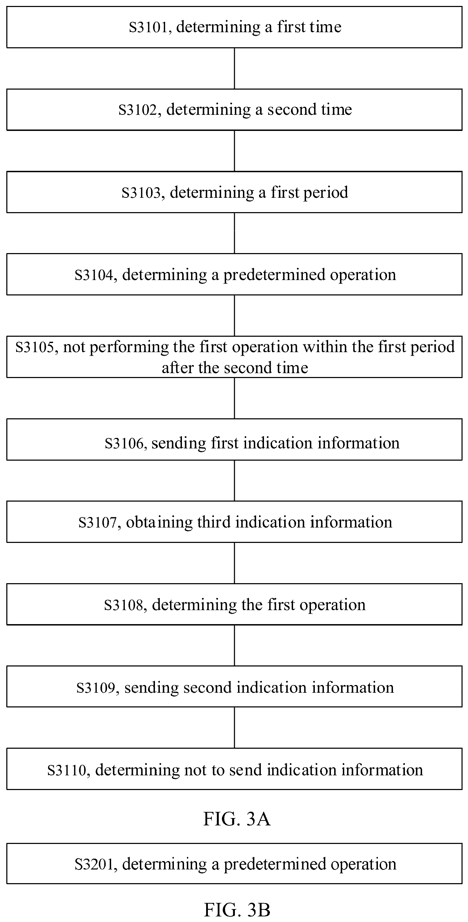

FIG. 3A is a flow chart illustrating a method for processing information according to an embodiment of the disclosure. As illustrated in FIG. 3A, embodiments of the disclosure relate to a method for processing information, performed by a terminal. The above method includes the following.

At step S3101, a first time is determined.

For alternative implementations of step S3101 reference may be made to the alternative implementations of step S2101 in FIG. 2 and other related parts in embodiments related to FIG. 2, and details are not repeated here.

Alternatively, the first time is determined based on an end time of a GNSS measurement period.

At step S3102, a second time is determined.

For alternative implementations of step S3102 reference may be made to the alternative implementations of step S2102 in FIG. 2 and other related parts in the embodiments related to FIG. 2, and details are not repeated here.

Alternatively, the second time is determined based on a time when GNSS location information is obtained.

At step S3103, a first period is determined.

For alternative implementations of step S3103 reference may be made to the alternative implementations of step S2103 in FIG. 2 and other related parts in the embodiments related to FIG. 2, and details are not repeated here.

At step S3104, a predetermined operation is determined.

For alternative implementations of step S3104 reference may be made to the alternative implementations of step S2104 in FIG. 2 and other related parts in the embodiments related to FIG. 2, and details are not repeated here.

At step S3105, the first operation is not performed within the first period after the second time.

For alternative implementations of step S3105 reference may be made to the alternative implementation of step S2105 in FIG. 2 and other related parts in the embodiments related to FIG. 2, and details are not repeated here.

At step S3106, first indication information is sent.

For alternative implementations of step S3105 reference may be made to the alternative implementations of step S2105 in FIG. 2 and other related parts in the embodiments related to FIG. 2, and details are not repeated here.

In some embodiments, the terminal sends the first indication information to a network device, but not limited thereto, and the first indication information may also be sent to other entities.

Alternatively, the first indication information is used for the network device to determine a GNSS measurement success of the terminal.

Alternatively, the first indication information is used for the network device to determine whether to send third indication information.

At S3107, third indication information is obtained.

For alternative implementations of step S3107 reference may be made to the alternative implementations of step S2107 in FIG. 2 and other related parts in the embodiments related to FIG. 2, and details will not be repeated here.

In some embodiments, the terminal receives the third indication information sent by the network device, but not limited thereto, and the third indication information may also be received from other entities.

In some embodiments, the terminal obtains the third indication information specified by a protocol.

In some embodiments, the terminal obtains the third indication information from an upper layer(s).

In some embodiments, the terminal obtains the third indication information by performing processing.

In some embodiments, step S3101 is omitted, and the first terminal autonomously implements the function indicated by the third indication information, or the above function is default or pre-configured.

At step S3108, the first operation is determined.

For alternative implementations of step S3108 reference may be made to the alternative implementations of step S2108 in FIG. 2 and other related parts in the embodiments related to FIG. 2, and details are not repeated here.

Alternatively, the first operation is determined based on the third indication information.

At step S3109, second indication information is sent.

For alternative implementations of step S3109 reference may be made to the alternative implementations of step S2109 in FIG. 2 and other related parts in the embodiments related to FIG. 2, and details are not repeated here.

In some embodiments, the terminal sends the second indication information to the network device, but not limited thereto, and the second indication information may also be sent to other entities.

At step S3110, it is determined not to send indication information.

Alternatively, the indication information includes the first indication information and/or the second indication information.

For alternative implementations of step S3110 reference may be made to the alternative implementations of step S2110 in FIG. 2 and other related parts in the embodiments related to FIG. 2, and details are not repeated here.

The method for processing information involved in the embodiments of the disclosure may include at least one of steps S3101 to S3110. For example, step S3104 may be implemented as an independent embodiment; step S3105 may be implemented as an independent embodiment; step S3106 may be implemented as an independent embodiment; step S3109 may be implemented as an independent embodiment; a combination of steps S3107 and S3108 may be implemented as an independent embodiment; a combination of steps S3101, S3102, S3103, and S3104 may be implemented as an independent embodiment; a combination of steps S3101, S3102, S3103, and S3105 may be implemented as an independent embodiment; a combination of steps S3101, S3102, S3103, and S3110 may be implemented as an independent embodiment; a combination of S3101, S3102, S3103, and S3105 may be implemented as an independent embodiment; a combination of steps S3101, S3102, S3103, S3105, S2106, and S3107 may be implemented as an independent embodiment; a combination of steps S3101, S3102, S3103, S3104, S3107, and S3108 may be implemented as an independent embodiment; and a combination of step S3101 to S3109 may be implemented as an independent embodiment.

In some embodiments, steps S3104 and S3105 may be implemented in a reverse order or simultaneously; and steps S3104 and S3106 may be implemented in a reverse order or simultaneously.

In some embodiments, steps S3101 to S3103 and steps S3105 to S3110 may be alternative, and one or more of these steps may be omitted or substituted in different embodiments.

In some embodiments, steps S3101 to S3104 and steps S3106 to S3110 may be alternative, and one or more of these steps may be omitted or substituted in different embodiments.

In some embodiments, steps S3101 to S3107 and steps S3109 to S3110 may be alternative, and one or more of these steps may be omitted or substituted in different embodiments.

In some embodiments, steps S3101 to S3109 may be alternative, and one or more of these steps may be omitted or substituted in different embodiments.

FIG. 3B is a flow chart illustrating a method for processing information according to an embodiment of the disclosure. As illustrated in FIG. 3B, embodiments of the disclosure relate to a method for processing information, performed by a terminal. The above method includes the following.

At step S3201, a predetermined operation is determined.

For alternative implementations of step S3201 reference may be made to the alternative implementations of step S2104 in FIG. 2, or the alternative implementations of step S3104 in FIG. 3A, and other related parts in the embodiments related to FIG. 2 and FIG. 3A, and details are not repeated here.

Alternatively, determining the predetermined operation includes: determining the predetermined operation based on the GNSS measurement success.

Alternatively, the predetermined operation includes at least one of: sending first indication information, in which the first indication information indicates the GNSS measurement success; or performing a first operation or not performing a first operation, in which the first operation includes at least one of: UL data transmission, DL data transmission, measurement operation, or control information detection.

In some embodiments, determining the predetermined operation based on the GNSS measurement success includes: determining the predetermined operation in the case that a second time is earlier than a first time, in which the first time is an end time of a GNSS measurement period, and the second time is a time of the GNSS measurement success.

In some embodiments, the method also includes: determining a first period based on a difference between the first time and the second time, in which determining the predetermined operation includes: determining the predetermined operation within the first period after the second time, and/or after the first time.

In some embodiments, the GNSS measurement period includes one of: a pre-configured GNSS measurement gap; or a timing period of a pre-configured GNSS measurement timer.

In some embodiments, determining the predetermined operation within the first period after the second time, and/or after the first time includes at least one of: not performing the first operation within the first period after the second time; or sending the first indication information after the first time.

In some embodiments, the method further includes one of: in the case that GNSS location information is not obtained before the first time, sending second indication information after the first time, in which the second indication information indicates a GNSS measurement failure; or in the case that GNSS location information is not obtained before the first time, determining not to send the indication information after the first time, in which the indication information includes the first indication information and/or the second indication information.

In some embodiments, the measurement operation includes DL synchronization measurement operation, and determining the predetermined operation within the first period after the second time, and/or after the first time includes at least one of: performing the DL synchronization measurement operation within the first period after the second time in the case that the first period is less than a predetermined period; or not performing at least one of the UL data transmission, the DL data transmission, or the control information detection within the first period after the second time in the case that the first period is less than a predetermined period.

In some embodiments, determining the predetermined operation within the first period after the second time, and/or after the first time also includes: sending the first indication information within the first period after the second time in the case that the first period is greater than or equal to a predetermined period.

In some embodiments, sending the first indication information within the first period after the second time includes: sending the first indication information at a third time after the second time and within the first period after the second time, in which the third time is determined based on the second time and a second period.

In some embodiments, determining the predetermined operation within the first period after the second time, and/or after the first time also includes: performing a control information detection operation at a fourth time after the third time and within the first period after the second time, in which the fourth time is determined based on the third time and a third period.

In some embodiments, the method also includes: receiving third indication information after the fourth time; and determining to perform the first operation based on the third indication information.

In some embodiments, the third period is greater than or equal to a fourth period, and the fourth period is an RTT between the terminal and a network device.

In some embodiments, the first period is specified by a protocol or configured by the network device; and/or the second period is specified by a protocol or configured by the network device; and/or the third period is specified by a protocol or configured by the network device.

The above embodiments may be implemented independently or in combination with each other. For alternative implementations, reference may be made to the alternative implementations of the steps in FIG. 2 and FIG. 3A, and details are not repeated here.

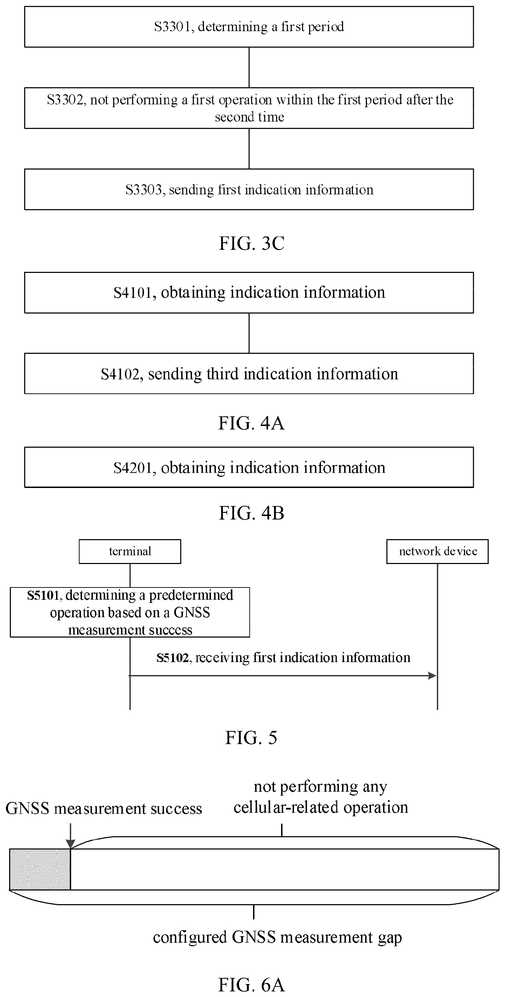

FIG. 3C is a flow chart illustrating a method for processing information according to an embodiment of the disclosure. As illustrated in FIG. 3C, embodiments of the disclosure relate to a method for processing information, performed by a terminal. The above method includes the following.

At step S3301, a first period is determined.

For alternative implementations of step S3301 reference may be made to the alternative implementations of step S2103 in FIG. 2, or the alternative implementations of step S3103 in FIG. 3A, and other related parts in the embodiments related to FIG. 2 and FIG. 3A, and details are not repeated here.

Alternatively, the terminal determines the first period based on a difference between the first time and the second time.

At S3302, a first operation is not performed within the first period after the second time.

For alternative implementations of step S3302 reference may be made to the alternative implementations of step S2105 in FIG. 2, or the alternative implementations of step S3105 in FIG. 3A, and other related parts in the embodiments related to FIG. 2 and FIG. 3A, and details are not repeated here.

At step S3303, first indication information is sent.

For alternative implementations of step S3303 reference may be made to the alternative implementations of step S2106 in FIG. 2, or the alternative implementations of step S3106 in FIG. 3A, and other related parts in the embodiments related to FIG. 2 and FIG. 3A, and details are not repeated here.

The above embodiments may be implemented independently or in combination with each other. For alternative implementations, reference may be made to the alternative implementations of the steps in FIG. 2 and FIG. 3A, and details are not repeated here.

FIG. 4A is a flow chart illustrating a method for processing information according to an embodiment of the disclosure. As illustrated in FIG. 4A, embodiments of the disclosure relate to a method for processing information, performed by a network device. The above method includes the following.

At step S4101, indication information is obtained.

For alternative implementations of step S4101 reference may be made to the alternative implementations of steps S2104, S2106, and S2109 in FIG. 2 and other related parts in the embodiments related to FIG. 2, and details are not repeated here.

Alternatively, the indication information includes the first indication information and/or the second indication information.

In some embodiments, the terminal receives the indication information sent by the network device, but is not limited thereto, and the indication information may also be received from other entities.

In some embodiments, the terminal obtains the indication information specified by a protocol.

In some embodiments, the terminal obtains the indication information from an upper layer(s).

In some embodiments, the terminal obtains the indication information by performing processing.

In some embodiments, step S3101 is omitted, and the first terminal autonomously performs the function indicated by the indication information, or the above function is default or pre-configured.

At step S4102, third indication information is sent.

For alternative implementations of step S4102 reference may be made to the alternative implementations of step S2107 in FIG. 2 and other related parts in the embodiments related to FIG. 2, and details are not repeated here.

In some embodiments, the network device sends the third indication information to the terminal, but not limited thereto, and the third indication information may also be sent to other entities.

The method for processing information involved in the embodiments of the disclosure may include at least one of steps S4101 or S4102. For example, step S4101 may be implemented as an independent embodiment; and a combination of steps S4101 and S4102 may be implemented as an independent embodiment.

In some embodiments, step S4101 and step S4102 may be implemented in a reverse order or simultaneously.

In some embodiments, step S4102 may be alternative, and one or more of these steps may be omitted or substituted in different embodiments.

FIG. 4B is a flow chart illustrating a method for processing information according to an embodiment of the disclosure. As illustrated in FIG. 4B, embodiments of the disclosure relate to a method for processing information, performed by a network device. The above method includes the following.

At step S4201, indication information is obtained.

For alternative implementations of step S4201 reference may be made to the alternative implementations of steps S2104, S2106, S2109 in FIG. 2, or the alternative implementations of step S4101 in FIG. 4A, and other related parts in the embodiments related to FIG. 2 and FIG. 4A, and details are not repeated here.

Alternatively, the indication information indicates whether a GNSS measurement success or not, in which the indication information is sent by a terminal after the GNSS measurement success is determined.

In some embodiments, the first indication information is sent after the terminal determines that a second time is earlier than a first time, the first time is an end time of a GNSS measurement period, and the second time is a time of the GNSS measurement success.

In some embodiments, the GNSS measurement period includes one of: a pre-configured GNSS measurement gap; or a timing period of a pre-configured GNSS measurement timer.

In some embodiments, receiving the first indication information includes one of: receiving the first indication information sent by the terminal after the first time; or receiving the first indication information sent by the terminal within a first period after the second time, in which the first period is determined by the terminal based on a difference between the first time and the second time.

In some embodiments, receiving the first indication information includes one of: receiving the first indication information sent by the terminal after the first time; receiving the first indication information sent by the terminal within a first period after the second time; or receiving the first indication information sent by the terminal after the second time.

In some embodiments, the indication information includes one of: the first indication information, indicating the GNSS measurement success, in which the first indication information is sent by the terminal within the first period after the second time, or the first indication information is sent by the terminal after the second time; or the second indication information, indicating the GNSS measurement failure, in which the second indication information is sent by the terminal after the second time in the case that the terminal does not obtain GNSS location information.

In some embodiments, receiving the second indication information includes: receiving the second indication information sent after the first time.

In some embodiments, the method also includes: sending third indication information in the case that the first indication information sent by the terminal within the first period after the second time is received, in which the third indication information indicates to perform a first operation, and the first operation includes at least one of: UL data transmission, DL data transmission, measurement operation, or control information detection.

The above embodiments may be implemented independently or in combination with each other. For alternative implementations, reference may be made to the alternative implementations of the steps in FIG. 2 and FIG. 3A, and details are not repeated here.

FIG. 5 is a flow chart illustrating a method for processing information according to an embodiment of the disclosure. As illustrated in FIG. 5, embodiments of the disclosure relate to a method for processing information, applied to a communication system. The above method includes the following.

At step S5101, a terminal determines a predetermined operation based on a GNSS measurement success.

Alternatively, the predetermined operation includes sending first indication information.

For alternative implementations of step S5101 reference may be made to the alternative implementations of step S2104 in FIG. 2, the alternative implementations of step S3104 in FIG. 3A, and other related parts in the embodiments related to FIG. 2 and FIG. 3A, and details are not repeated here.

At step S5102, a network device receives first indication information sent by the terminal.

Alternatively, the network device determines the GNSS measurement success of the terminal based on the first indication information.

For alternative implementations of step S5102 reference may be made to the alternative implementations of step S2106 in FIG. 2, the alternative implementations of step S3106 in FIG. 3A, the alternative implementations of step S4101 in FIG. 4A, and other related parts in the embodiments related to FIG. 2, FIG. 3A, and FIG. 4A, and details are not repeated here.

**In** some embodiments, the above method may include methods described in the embodiments related to the system 100, the terminal, the network device, etc., for processing information, and details are not repeated here.

Embodiments of the disclosure relate to a method for processing information. The above method includes the following.

At step S6101, a terminal determines an end time of a GNSS measurement gap or a GNSS measurement timer.

Alternatively, the terminal may determine length information and a start position of the GNSS measurement gap or the GNSS measurement timer based on a pre-defined way or by receiving configuration information of a base station, thus obtaining the end time of the GNSS measurement gap or the GNSS measurement timer.

Alternatively, the end time may be the first time in the above embodiments.

At step S6102, the terminal determines a time of the GNSS measurement success.

Alternatively, the start position of performing the GNSS measurement by the terminal within the GNSS measurement gap or the GNSS measurement timer may be autonomously implemented based on a selection by the terminal, or the terminal needs to perform the GNSS measurement at the start position of the GNSS measurement gap or the GNSS measurement timer.

Alternatively, the terminal determines the time of the GNSS measurement success by determining that available GNSS location information is obtained.

Alternatively, the time of the GNSS measurement success may be the second time in the above embodiments.

At step S6103, the terminal determines length information X of a time interval between the time of the GNSS measurement success and the end time of the GNSS measurement gap or the GNSS measurement timer.

Alternatively, the length information X may be the first period in the above embodiments.

At step S6104, regardless of a value of the length X, the terminal does not perform any relevant operations such as UL and DL transmission, control signaling monitoring, and/or measurement before the end time of the GNSS measurement gap or the GNSS measurement timer. For example, as illustrated in FIG. 6A, the terminal does not perform any cellular-related operations at a time unit X. The terminal sends indication information of the GNSS measurement success after the end time of the GNSS measurement gap or the GNSS measurement timer, and receives an indication from the base station to determine a subsequent behavior.

Alternatively, in the case that the terminal does not successfully obtain the GNSS location information before the end time of the GNSS measurement gap or the GNSS measurement timer, the terminal does not report any indication information, or reports indication information of a GNSS measurement failure.

Alternatively, relevant operations such as UL and DL transmission, control signaling monitoring, and/or measurement may be the first operation in the above embodiments. The indication information of the GNSS measurement success may be the first indication information in the above embodiments; and the indication information of the GNSS measurement failure may be the second indication information in the above embodiments.

At step S6105, the terminal determines that X is less than a predefined time length, and the terminal performs DL synchronization measurement or the terminal does not perform any cellular-related operations.

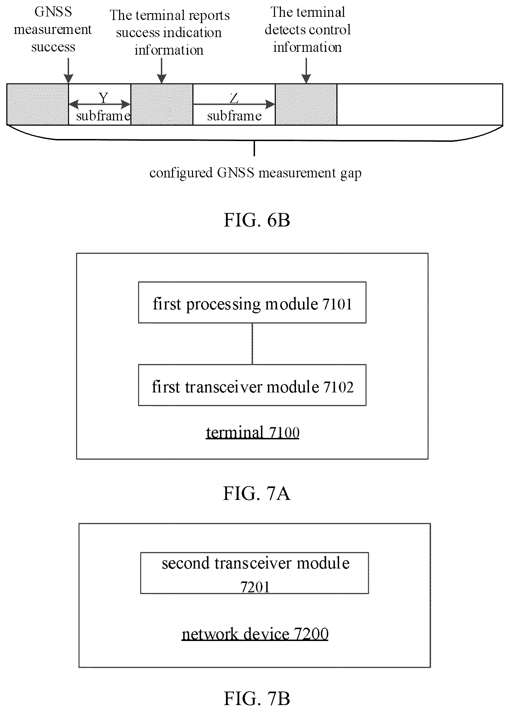

Alternatively, as illustrated in FIG. 6B, the terminal determines that X is greater than the predefined time length, and the terminal sends success indication information after delaying a time interval Y from a time position of the GNSS measurement success. The terminal starts performing PDCCH measurement after a predefined time interval Z after sending the success indication information. The terminal may perform operations such as UL and DL data transmission and measurement based on an indication of the base station.

Alternatively, values of X, Y, Z are predefined or determined by the terminal receiving the configuration information of the base station. Alternatively, a value of Z needs to be greater than or equal to an RTT from the terminal to the base station.

Alternatively, the predefined time length may be the predetermined period in the above embodiments; the DL synchronization measurement and/or cellular-related operations; Y may be the second period in the above embodiments; and Z may be the third period in the above embodiments.

The method for processing information involved in the embodiments of the disclosure may include at least one of steps S6101 to S6105. For example, step S6104 may be implemented as an independent embodiment; step S6105 may be implemented as an independent embodiment; a combination of steps S6101 to S6104 may be implemented as an independent embodiment; and a combination of steps S6101 to S6103 and S6105 may be implemented as an independent embodiment.

In some embodiments, steps S6104 and S6105 may be implemented in a reverse order or simultaneously.

In some embodiments, step S6104 may be alternative, and one or more of these steps may be omitted or substituted in different embodiments.

In some embodiments, step S6105 may be alternative, and one or more of these steps may be omitted or substituted in different embodiments.

In the embodiments of the disclosure, some or all steps and alternative implementations may be arbitrarily combined with some or all steps in other embodiments, and may also be arbitrarily combined with alternative implementations of other embodiments.

Embodiments of the disclosure also provide an apparatus for implementing any one of the above methods. For example, an apparatus is provided, including units or modules for implementing the steps executed by a terminal in any one of the above methods. For another example, another apparatus is provided, including units or modules for implementing the steps executed by a network device (such as an access network device, a core network function node, a core network device, etc.) in any one of the above methods.

It should be understood that the division of units in the above apparatuses is merely a division of logical functions. In an actual implementation, the units may be fully or partially integrated into a single physical entity or may be physically separated. In addition, the units in the apparatus may be implemented in the form of a processor calling software. For example, the apparatus includes a processor, and the processor is connected to a memory for storing computer instructions. The processor calls the computer instructions stored in the memory to implement any one of the above methods or the functions of the units in the apparatus. The processor may be a general-purpose processor, such as a central processing unit (CPU) or a microprocessor, and the memory may be a memory internal or external to the apparatus. Alternatively, the units in the apparatus may be implemented in a form of a hardware circuit. Some or all of the functions of the units may be implemented via a design of the hardware circuit. The hardware circuit may be understood as one or more processors. For example, in an implementation, the hardware circuit is an application-specific integrated circuit (ASIC). Functions of some or all of the units are implemented by designing logical relationships among components in the circuit. In another implementation, the hardware circuit may be implemented using a programmable logic device (PLD). Taking a field programmable gate array (FPGA) as an example, the FPGA may include a large number of logic gate circuits, and a connection relationship between the logic gate circuits are configured by a configuration file to implement the functions of some or all of the units. All units of the above apparatus may be fully implemented in the form of the processor calling software, or fully implemented in the form of the hardware circuit, or partially implemented in the form of the processor calling software and the remaining part implemented in a form of the hardware circuit.

In embodiments of the disclosure, the processor is a circuit with a signal processing capability. In an implementation, the processor may be a circuit capable of reading and running instructions, such as a central processing unit (CPU), a microprocessor, a graphics processing unit (GPU) (which may be understood as a microprocessor), or a digital signal processor (DSP). In another implementation, the processor may implement certain functions by a logical relationship of the hardware circuit. The logical relationship of the hardware circuit may be fixed or reconfigurable. For example, the processor may be a hardware circuit implemented by an application-specific integrated circuit (ASIC) or programmable logic device (PLD), such as an FPGA. In a reconfigurable hardware circuit, a process in which the processor loads the configuration file to configure the hardware circuit may be understood as a process that the processor loads instructions to realize the functions of some or all of the units. In addition, the hardware circuit may be designed specifically for artificial intelligence and may be understood as an ASIC, such as a neural network processing unit (NPU), a tensor processing unit (TPU), or deep learning processing unit (DPU).

FIG. 7A is a block diagram illustrating a terminal according to an embodiment of the disclosure. As illustrated in FIG. 7A, a terminal 7100 includes: at least one of a first processing module 7101 and a first transceiver module 7102. In some embodiments, the first processing module 7101 is configured to determine a predetermined operation based on a GNSS measurement success. Alternatively, the first processing module 7101 is configured to perform at least one of steps (such as, steps S2101 to S2105, S2108, and/or S2110, etc., but not limited thereto) executed by the terminal in any one of the above methods, and details are not repeated here. Alternatively, the first transceiver module 7102 is configured to perform at least one of steps such as sending and/or receiving (such as, steps S2106, S2107, and/or S2109, etc., but not limited thereto) executed by the terminal in any one of the above methods, and details are not repeated here.

FIG. 7B is a block diagram illustrating a network device according to an embodiment of the disclosure. As illustrated in FIG. 7B, a network device 7200 includes: a second transceiver module 7201. In some embodiments, the second transceiver module 7201 is configured to receive indication information. Alternatively, the second transceiver module 7201 is configured to perform at least one of steps such as sending and/or receiving (such as, steps S2106, S2107, and/or S2109, etc., but not limited thereto) executed by the terminal in any one of the above methods, and details are not repeated here.

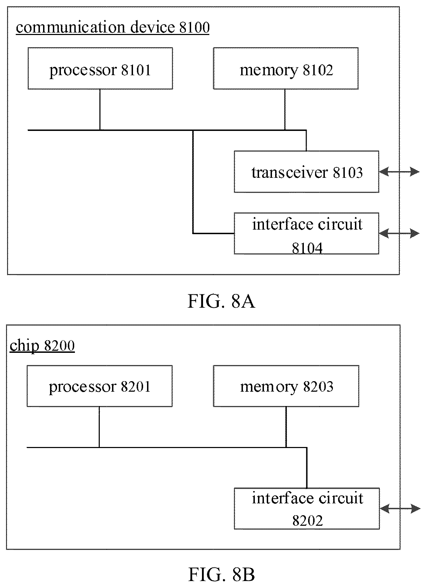

FIG. 8A is a block diagram illustrating a communication device 8100 according to an embodiment of the disclosure. The communication device 8100 may be a network device (such as an access network device, a core network device, etc.), or may be a terminal (such as a user equipment, etc.), or may be a chip, a chip system, or a processor that supports the network device to implement any one of the above methods, or may be a chip, a chip system, or a processor that supports the terminal to implement any one of the above methods. The communication device 8100 may be configured to implement the methods described in the above method embodiments, and detailed reference may be made to the descriptions in the above method embodiments.

As illustrated in FIG. 8A, the communication device 8100 includes one or more processors 8101. The processor 8101 may be a general-purpose processor or a dedicated processor, such as, a baseband processor and a central processor. The baseband processor is configured to process communication protocols and communication data. The central processor is configured to control the communication device (such as, a base station, a baseband chip, a terminal, a terminal chip, a DU, or a CU), to execute programs, and to process data of the programs. The processor 8101 is configured to call instructions to cause the communication device 8100 to implement any one of the above methods.

In some embodiments, the communication device 8100 also includes one or more memories 8102 for storing instructions. Alternatively, all or some of the memories 8102 may also be located outside the communication device 8100.

In some embodiments, the communication device 8100 also includes one or more transceivers 8103. When the communication device 8100 includes one or more transceivers 8103, communication steps such as sending and receiving (such as at least one of steps S2101 to S2106, but not limited to this) in the above methods are performed by the transceiver 8103, and at least one of other steps (such as at least one of steps S2101 to S2106, but not limited to this) are performed by the processor 8101.

In some embodiments, the transceiver may include a receiver and a transmitter, which may be separate or integrated. Alternatively, terms such as transceiver, transceiver unit, transceiver machine, transceiver circuit, etc. may be used interchangeably. Terms such as transmitter, sending unit, transmitter machine, sending circuit, etc. may be used interchangeably. Terms such as receiver, receiving unit, receiver machine, receiving circuit, etc. may be used interchangeably.

Alternatively, the communication device 8100 also includes one or more interface circuits 8104. The interface circuit 8104 is connected to the memory 8102 and may be used to receive signals from the memory 8102 or other devices, or send signals to the memory 8102 or other devices. For example, the interface circuit 8104 may read instructions stored in the memory 8102 and send the instructions to the processor 8101.

The communication device 8100 in the description of the above embodiments may be a network device or a terminal, but the scope of the communication device 8100 described in the disclosure is not limited thereto, and the structure of the communication device 8100 may not be limited by FIG. 8A. The communication device may be a stand-alone device or may be part of a larger device. For example, the communication device may be: (1) a stand-alone IC, a chip, a chip system or a subsystem; (2) a collection of ICs including one or more ICs, alternatively, the collection of ICs including storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 8B is a block diagram illustrating a chip 8200 according to an embodiment of the disclosure. For a case where the communication device 8100 may be a chip or chip system, reference may be made to the block diagram of the chip 8200 illustrated in FIG. 8B, which is not limited to this.

The chip 8200 includes one or more processors 8201, and the processor 8201 is configured to perform any one of the above methods.

In some embodiments, the chip 8200 also includes one or more interface circuits 8202. The interface circuit 8202 is connected to a memory 8203 and may be used to receive signals from the memory 8203 or other devices, or send signals to the memory 8203 or other devices. For example, the interface circuit 8202 may read instructions stored in the memory 8203 and send the instructions to the processor 8201.

In some embodiments, the interface circuit 8202 is configured to perform at least one of communication steps such as sending and/or receiving (such as at least one of steps S2101 to S2106, but not limited to this) in the above method, and the processor 8201 is configured to perform at least one of other steps (such as at least one of steps S2101 to S2106, but not limited to this).

Alternatively, terms such as interface circuit, interface, transceiver pin, transceiver, etc. may be used interchangeably.

In some embodiments, the chip 8200 also includes one or more memories 8203 for storing instructions. Alternatively, all or some of the memories 8203 may be located outside the chip 8200.

The disclosure also provides a storage medium for storing instructions. When the instructions are run on the communication device 8100, the communication device 8100 is caused to perform any one of the above methods. Alternatively, the storage medium is an electronic storage medium. Alternatively, the storage medium is a computer-readable storage medium, but not limited thereto. The storage medium may also be a storage medium readable by other devices. Alternatively, the storage medium may be a non-transitory storage medium, but not limited thereto. The storage medium may also be a transitory storage medium.

The disclosure also provides a program product. When the program product is executed by the communication device 8100, the communication device 8100 is caused to perform any one of the above methods. Alternatively, the program product is a computer program product.

The disclosure also provides a computer program. When the computer program is run on a computer, the computer is caused to perform any one of the above methods.

## Claims

1. A method for processing information, comprising:
determining, by a terminal, a predetermined operation based on a global navigation satellite system (GNSS) measurement success, wherein the predetermined operation comprises at least one of:
sending first indication information, wherein the first indication information indicates the GNSS measurement success; or
performing a first operation or not performing a first operation, wherein the first operation comprises at least one of: uplink (UL) data transmission or downlink (DL) data transmission, measurement operation, or control information detection.

2. The method of claim 1, wherein determining the predetermined operation based on the GNSS measurement success comprises:
determining the predetermined operation in the case that a second time is earlier than a first time, wherein the first time is an end time of a GNSS measurement period, and the second time is a time of the GNSS measurement success.

3. The method of claim 2, further comprising:
determining a first period based on a difference between the first time and the second time,
wherein determining the predetermined operation comprises: determining the predetermined operation within the first period after the second time, and/or after the first time.

4. The method of claim 2 or 3, wherein the GNSS measurement period comprises one of:
a pre-configured GNSS measurement gap; or
a timing period of a pre-configured GNSS measurement timer.

5. The method of claim 3, wherein determining the predetermined operation within the first period after the second time, and/or after the first time comprises at least one of:
not performing the first operation within the first period after the second time; or
sending the first indication information after the first time.

6. The method of claim 3, wherein the measurement operation comprises DL synchronization measurement operation, and determining the predetermined operation within the first period after the second time, and/or after the first time comprises at least one of:
performing the DL synchronization measurement operation within the first period after the second time in the case that the first period is less than a predetermined period; or
not performing at least one of the UL data transmission, the DL data transmission, or the control information detection within the first period after the second time in the case that the first period is less than a predetermined period.

7. The method of claim 3, wherein determining the predetermined operation within the first period after the second time, and/or after the first time further comprises:
sending the first indication information within the first period after the second time in the case that the first period is greater than or equal to a predetermined period.

8. The method of claim 7, wherein sending the first indication information within the first period after the second time comprises:
sending the first indication information at a third time after the second time and within the first period after the second time, wherein the third time is determined based on the second time and a second period.

9. The method of claim 8, wherein determining the predetermined operation within the first period after the second time, and/or after the first time further comprises:
performing a control information detection operation at a fourth time after the third time and within the first period after the second time, wherein the fourth time is determined based on the third time and a third period.

10. The method of claim 9, further comprising:
receiving third indication information after the fourth time; and
determining to perform the first operation based on the third indication information.

11. The method of claim 8 or 9, wherein the third period is greater than or equal to a fourth period, and the fourth period is a round-trip time (RTT) between the terminal and a network device.

12. The method of any one of claims 9 to 11, wherein
the first period is specified by a protocol or configured by the network device;
and/or
the second period is specified by a protocol, or the first period is configured by the network device;
and/or
the third period is specified by a protocol, or the first period is configured by the network device.

13. The method of any one of claims 2, 3, 5, and 6 to 9, wherein
the first time is specified by a protocol or configured by a network device;
and/or
the second time is determined based on a time when GNSS location information is obtained.

14. A method for processing information, comprising:
receiving, by a network device, first indication information, wherein the first indication information indicates a global navigation satellite system (GNSS) measurement success, and the first indication information is sent by a terminal after the GNSS measurement success is determined.

15. The method of claim 14, wherein the first indication information is sent after the terminal determines that a second time is earlier than a first time, the first time is an end time of a GNSS measurement period, and the second time is a time of the GNSS measurement success.

16. The method of claim 15, wherein the GNSS measurement period comprises one of:
a pre-configured GNSS measurement gap; or
a timing period of a pre-configured GNSS measurement timer.

17. The method of claim 15 or 16, wherein receiving the first indication information comprises one of:
receiving the first indication information sent by the terminal after the first time;
receiving the first indication information sent by the terminal within a first period after the second time, wherein the first period is determined by the terminal based on a difference between the first time and the second time; or
receiving the first indication information sent by the terminal after the second time.

18. The method of claim 17, further comprising:
sending third indication information in the case that the first indication information sent by the terminal within the first period after the second time is received, wherein the third indication information indicates to perform a first operation, and the first operation comprises at least one of: uplink (UL) data transmission, downlink (DL) data transmission, measurement operation, or control information detection.

19. A method for processing information, comprising:
determining, by a terminal, a predetermined operation based on a global navigation satellite system (GNSS) measurement success, wherein the predetermined operation comprises sending first indication information; and
receiving, by a network device, the first indication information sent by the terminal.

20. The method of claim 19, further comprising:
determining, by the terminal, a first period based on a difference between a first time and a second time, wherein the first time is an end time of a GNSS measurement period, and the second time is a time of the GNSS measurement success; and
determining, by the terminal, the predetermined operation based on the GNSS measurement success comprises: sending, by the terminal, the first indication information after the first time.

21. A terminal, comprising:
a first processing module, configured to determine a predetermined operation based on a global navigation satellite system (GNSS) measurement success, wherein the predetermined operation comprises at least one of:
sending first indication information, wherein the first indication information indicates the GNSS measurement success; or
performing a first operation or not performing a first operation, wherein the first operation comprises at least one of: uplink (UL) data transmission or downlink (DL) data transmission, measurement operation, or control information detection.

22. A network device, comprising:
a second transceiver module, configured to receive first indication information, wherein the first indication information indicates a global navigation satellite system (GNSS) measurement success, and the first indication information is sent by a terminal after the GNSS measurement success is determined.

23. A terminal, comprising:
one or more processors,
wherein the terminal is configured to perform the method for processing information of any one of claims 1 to 13.

24. A network device, comprising:
one or more processors,
wherein the network device is configured to perform the method for processing information of any one of claims 14 to 18.

25. A communication system, comprising: a terminal and a network device, wherein the terminal is configured to implement the method for processing information of any one of claims 1 to 13, and the network device is configured to implement the method for processing information of any one of claims 14 to 18.

26. A computer storage medium for storing instructions that, when running on a communication device, cause the communication device to implement the method for processing
information of any one of claims 1 to 13, 14 to 18, or 19 to 20.
